# EUROPEAN PATENT APPLICATION

(11) **EP 3 992 366 A1**
(43) Date of publication of application: **04.05.2022**
(21) Application number: 20204797.3
(22) Date of filing: 29.10.2020
(51) Int. Cl.: E01H 3/00, E01H 3/02

(54) **DEVICE FOR ARTIFICIALLY GENERATING ROAD SPRAY AND METHOD USING ARTIFICIALLY GENERATED ROAD SPRAY**

(71) Applicant: Technische Hochschule Ingolstadt, 85049 Ingolstadt (DE)
(72) Inventor: Huber, Werner, 85609 Aschheim (DE); Rothmeier, Thomas, 93053 Regensburg (DE); Kolb, Jan Christopher, 85055 Ingolstadt (DE)
(74) Representative: Koplin, Moritz

(57) **Abstract**

Provided is a device for artificially generating road spray and a method. The device comprises a frame, a roller, and a reservoir, wherein the roller is rotatably mounted on the frame and wherein the device is configured to supply a liquid from the reservoir to a surface of the roller. The method comprises supplying water and/or a suspension comprising water to a surface of a rotating roller and exposing a vehicle to road spray generated by the rotation of the wetted roller.

## Description

### Field

The present disclosure relates to artificially generating road spray. In particular, the present disclosure relates to testing a vehicle sensor under adverse conditions.

### Background

Road spray can not only block human sight but may also reduce the accuracy of information derived from sensor data.

### Summary

The present disclosure is directed at a device for artificially generating road spray and a method using artificially generating road spray.

The device comprises a frame, a roller, and a reservoir, wherein the roller is rotatably mounted on the frame and wherein the device is configured to supply a liquid from the reservoir to a surface of the roller.

In this regard, the term "frame", as used throughout the description and the claims, particularly refers to a rigid structure which supports an axle of the roller or both ends of the roller. Furthermore, the term "roller", as used throughout the description and the claims, particularly refers to a substantially cylindrical body. Moreover, the term "reservoir", as used throughout the description and the claims, particularly refers to a water tank. In addition, the formulation "to supply a liquid from the reservoir to a surface of the roller", as used throughout the description and the claims, particularly refers to spraying or pouring the liquid onto the roller. In this regard, the term "liquid", as used throughout the description and the claims, particularly refers to water. The water may be mixed with particles (forming a suspension) and/or a chemical such as, for example, a surface active agent.

The device may further comprise a towable chassis having at least two wheels. For instance, the device may be a trailer that can be towed by a towing vehicle. Alternatively, the device may be mounted on a motor vehicle having at least two wheels.

The device may further comprise a drive, particularly a motor, wherein the drive is configured to cause a rotation of the roller relative to the frame. Alternatively, the roller may be coupled to one of the wheels such that a rotation of the wheel causes a rotation of the roller. The device may be provided with a transmission (and optionally a gearbox) which allows adjusting the rotational speed of the roller.

During operation, the axis of rotation of the roller may be less than 1 meter above the ground. This may allow for a more realistic simulation of road spray where the road spray is kicked up towards a trailing vehicle. The term "operation", as used throughout the description and the claims, particularly refers to a state in which the liquid is supplied to the surface of the roller.

The device may further comprise a nozzle, wherein the nozzle is connected to the reservoir and wherein the nozzle is aligned and/or configured to supply the liquid from the reservoir through the nozzle onto the surface of the roller. The nozzle may be arranged above the roller. This may enable gravity feeding the liquid towards the surface. The flow of the liquid may be controlled by a mechanical or electromechanical valve. Additionally or alternatively, the device may comprise a pump that controls the flow of the liquid towards the surface.

The device may further comprise an adjustable deflector for controlling a directivity of the artificially generated road spray. For example, by changing a position and/or orientation of the deflector, the road spray may be focused.

The device may further comprise a tray arranged below the roller. The tray may have an outlet that allows feeding excess liquid back into the reservoir. Alternatively, the tray may be filled with the liquid until the surface of the rotating roller comes into contact with the liquid, thereby generating the road spray.

The device may further comprise a sensor for detecting a density and/or directivity of the road spray. For example, the device may comprise an optical sensor such as a camera that allows detecting a density and/or directivity of the road spray. The sensor data may be used to control the density and/or directivity of the road spray. For example, the sensor data may be used to determine an increase/decrease of a rate at which the liquid is supplied to the surface of the roller and/or a change in the position and/or orientation of the deflector.

The surface of the roller may be structured. For example, the surface may have pointed or rounded protrusions or fins.

The roller may comprise a cylindrical body and a removable sleeve mounted to the cylindrical body. The removable sleeve may have a first surface pattern and may be replaced with a sleeve having a second surface pattern which is different from the first surface pattern. This may allow quickly adapting the device to different testing scenarios.

The method comprises supplying water and/or a suspension comprising water to a surface of a rotating roller and exposing a vehicle to road spray generated by the rotation of the wetted roller.

The method may further comprise testing a sensor of the vehicle. For example, the method may further comprise testing an obstacle detection sensor of the vehicle.

During operation, an axis of rotation of the roller may be less than 1 meter or less than half a height of the vehicle above the ground.

The vehicle may move while being exposed to the road spray. For example, the vehicle may be driven on a road on a testing site.

The method may further comprise controlling properties of the road spray through a wireless connection. For example, a valve and/or a pump that control(s) the flow of liquid towards the surface of the roller may be controllable through a wireless connection. This may improve the overall safety of the test as it would allow, for example, to reduce or stop the generation of road spray, if necessary.

### Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified.
Fig. 1 schematically illustrates a side view of a device for artificially generating road spray.
Fig. 2a schematically illustrates a rear view of the device of Fig. 1 according to a first embodiment.
Fig. 2b schematically illustrates a rear view of the device of Fig. 1 according to a second embodiment.
Fig. 3 schematically illustrates a first possible modification of the device of Fig. 1.
Fig. 4 schematically illustrates a second possible modification of the device of Fig. 1.
Fig. 5 schematically illustrates a third possible modification of the device of Fig. 1.
Fig. 6 schematically illustrates a fourth possible modification of the device of Fig. 1.
Fig. 7 and Fig. 8 schematically illustrate a fifth possible modification of the device of Fig. 1.
Fig. 9 schematically illustrates a sixth possible modification of the device of Fig. 1.
Fig. 10 schematically illustrates a seventh possible modification of the device of Fig. 1.
Fig. 11 schematically illustrates an eighth possible modification of the device of Fig. 1.
Fig. 12 schematically illustrates a ninth possible modification of the device of Fig. 1.
Fig. 13 and Fig. 14 schematically illustrate usage scenarios for the device of Fig. 1.
Fig. 15 shows a flow-chart of a method which involves artificially generating road spray.

Notably, the drawings are not drawn to scale and unless otherwise indicated, they are merely intended to conceptually illustrate the structures and procedures described herein.

### Description of Embodiments

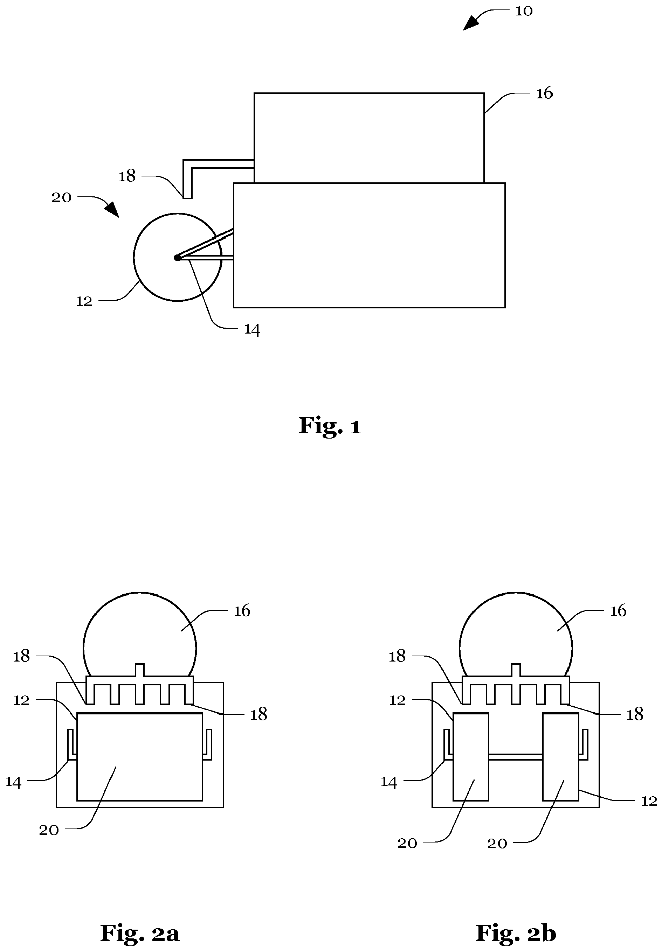

Fig. 1 shows a side view of device 10 which is configured to artificially generate road spray. Device 10 comprises roller 12 rotatably mounted on frame 14, and reservoir 16. Reservoir 16 is connected to nozzles 18 which are arranged above roller 12. During operation, liquid flow through nozzles 18 onto surface 20 of roller 12 may be controlled by a valve and/or a pump (not shown). To most accurately replicate real road spray, roller 12 may be arranged close to the ground. For example, an axis of rotation of roller 12 may be less than 1 meter above the ground and/or a distance (clearance) between roller 12 and the ground may be less than 0.5 meters. Device 10 may enable only one direction of rotation of roller 12 (clockwise or counter-clockwise, i.e., conveying liquid from the nozzles 18 towards the ground before kicking it up or immediately kicking it up) or device 10 may enable both directions of rotation of roller 12.

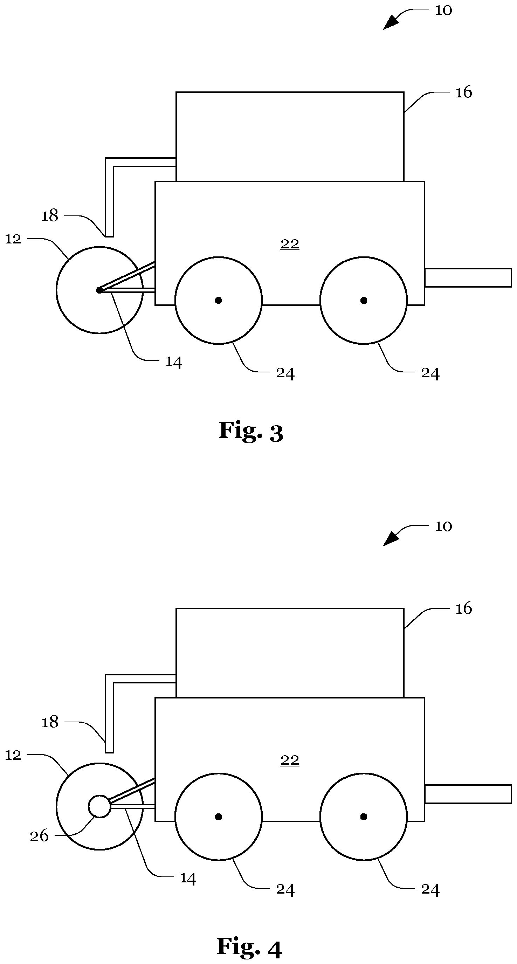

As illustrated in Fig. 2a, device 10 may comprise a single roller 12. However, as illustrated in Fig. 2b, device may also comprise two (coaxial) rollers 12. For example, rollers 12 in Fig. 2b may have a distance that is substantially equal to a distance of two tires of a vehicle. Moreover, the distance may be adjustable so as to simulate road spray caused by vehicles of different sizes. As shown in Fig. 3, device 10 shown in Fig. may comprise towable chassis 22 with wheels 24. In particular, device 10 may be a one-axle or a two-axle (semi-)trailer that can be towed by a motored vehicle. Alternatively, device 10 shown in Fig. 1 and Fig. 2 may be mounted on a motored vehicle such as a truck.

As illustrated in Fig. 4, device 10 shown in the preceding figures may comprise drive 26 which controls the rotation of roller 12 relative to frame 14. Drive 26 may be arranged between frame 14 and roller 12 or may be integrated into chassis 22. Drive 26 may be connected to roller 12 by a transmission (and optionally a gearbox). Instead of drive 26, roller 12 may also be driven by one of wheels 24 such that roller 12 can be caused to rotate when device 10/chassis 22 moves. In this case, roller 12 may be connected to one of wheels 24 by a transmission (and optionally a gearbox).

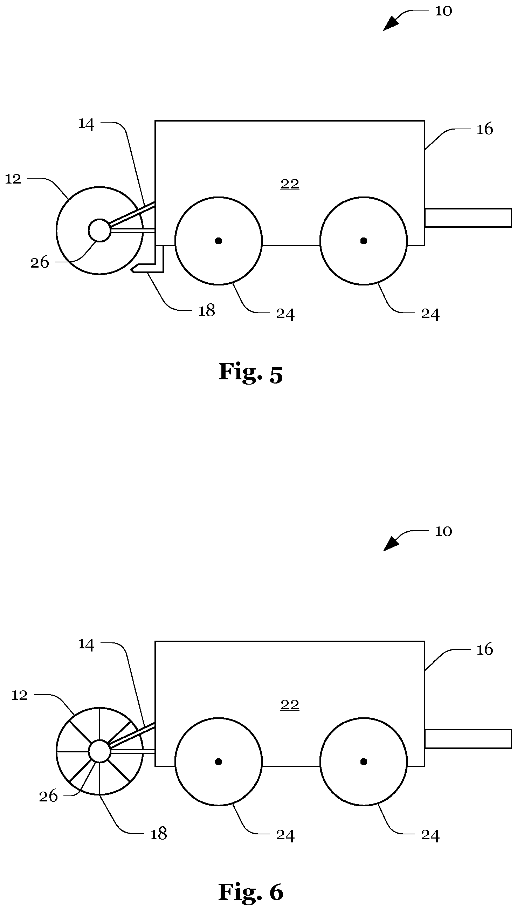

As illustrated in Fig. 5, nozzle 18 may be arranged below the level of the axis of rotation of roller 12 and supply the liquid towards roller 12 in a horizontal or even upward direction. Moreover, as schematically illustrated in Fig. 6, the liquid may be supplied through channels in roller 12. For example, the liquid may be flown into roller 12 and supplied to surface 20 through openings in surface 20 from within roller 12. For instance, surface 20 may be mesh-like and the centrifugal force may force the liquid through the openings.

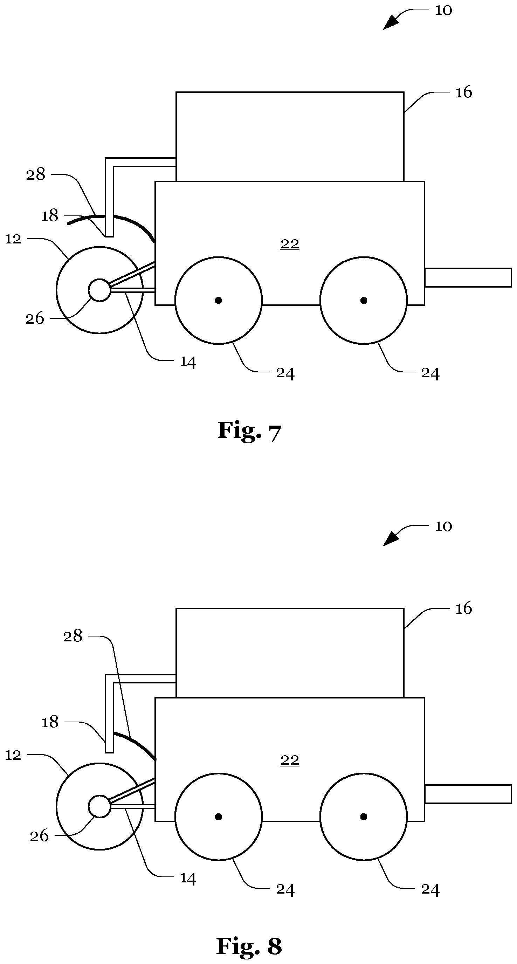

As illustrated in Fig. 7 and Fig. 8, device 10 shown in the preceding figures may comprise adjustable deflector 28 for controlling a directivity of the artificially generated road spray. Adjustable deflector 28 may be mounted above roller 12 and, depending on its size, position and/or orientation allows or avoids road spray being kicked-up in a particular direction.

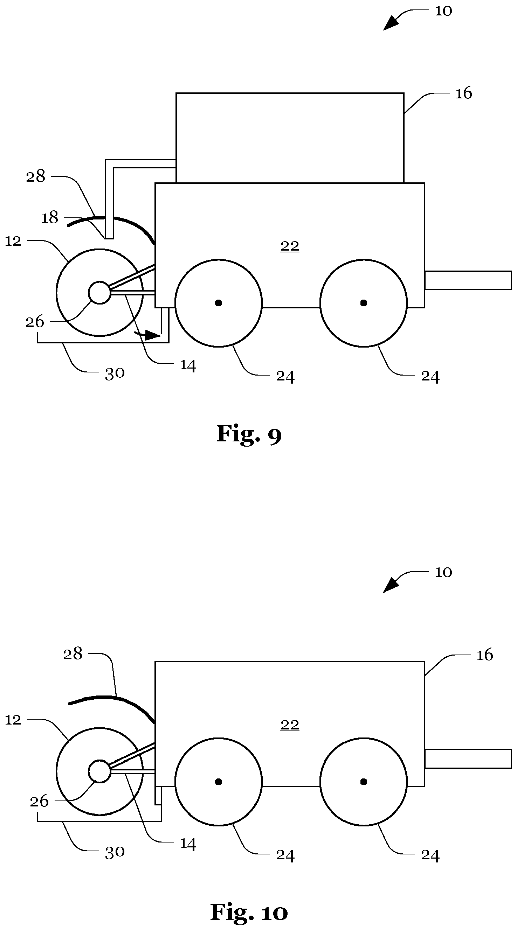

As shown in Fig. 9, device 10 shown in the preceding figures may comprise tray 30 arranged below roller 12. Tray 30 may be used to collect excess liquid. The collected excess liquid may be kept in tray 30 to wet roller 12 or may be used to replenish reservoir 16. As shown in Fig. 8, reservoir 16 may also be integrated into chassis 22 and liquid may be supplied directly to tray 30 to be picked up by roller 12.

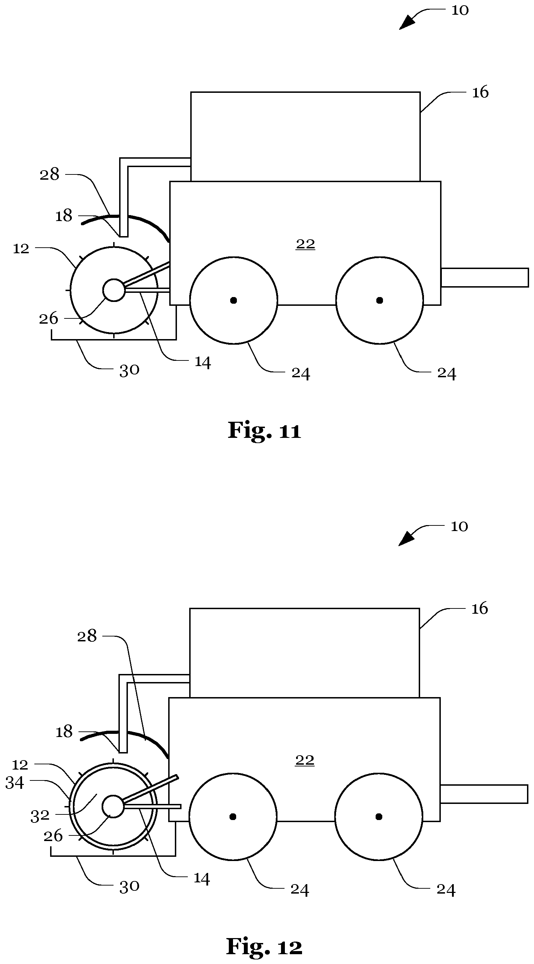

As shown in Fig. 11, surface 20 of roller 12 may be structured. For example, surface 20 may have pointed or rounded protrusions or fins. If it is desired to use different surfaces 20/surface structures, roller 12 maybe replaced with another roller 12 or, as illustrated in Fig. 10, roller 12 may comprise a cylindrical body 32 and a removable sleeve 34 mounted to the cylindrical body 32 such that different surfaces 20/surface structures may be provided by replacing sleeve 34 with another sleeve 34.

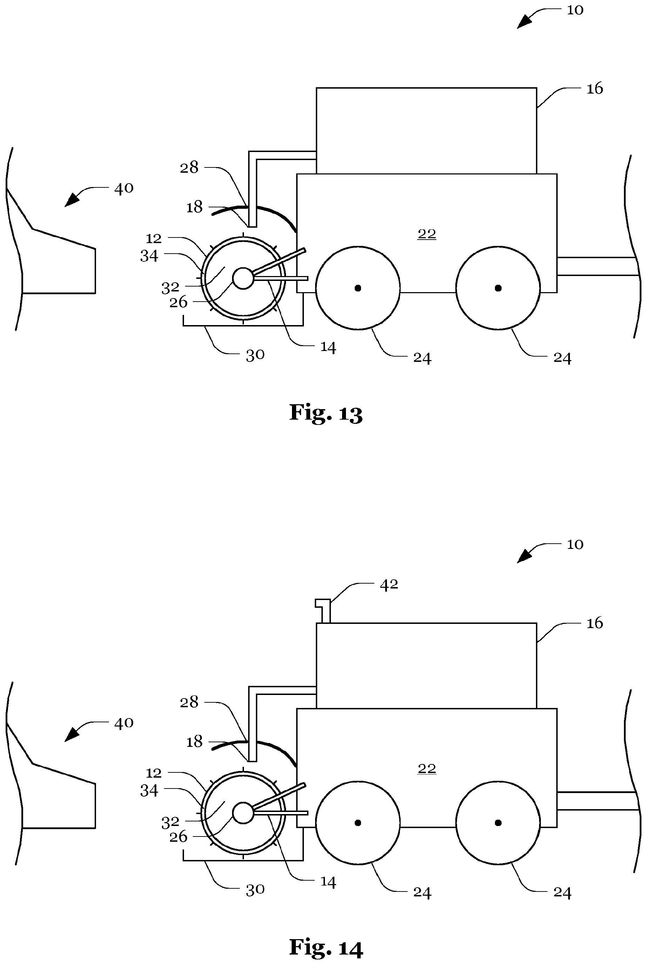

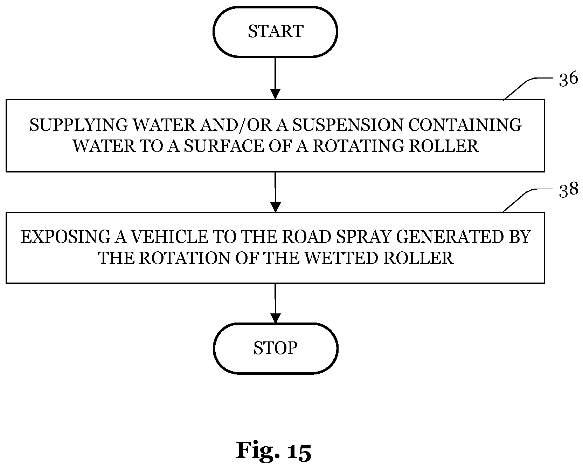

Fig. 13, Fig. 14 and Fig. 15 illustrate usage scenarios for device 10 shown in the preceding figures. At 36, water and/or a suspension comprising water is supplied to surface 20 of roller 12. The rotation of roller 12 generates artificial road spray and the process is continued at 38 with exposing vehicle 40 to the road spray generated by the rotation of wetted roller 12. Device 10 may comprise a sensor for detecting a density and/or directivity of the road spray and may be configured to change the density and/or directivity of the road spray based on sensor data in accordance with a testing scenario. Alternatively, or in addition, the properties of the road spray may be controlled through a wireless connection. As illustrated in Fig. 14, additionally and/or alternately liquid may also be sprayed from nozzle 42 which is arranged on top of device 10 onto vehicle 40.

### Reference Signs List

- 10: device
- 12: roller
- 14: frame
- 16: reservoir
- 18: nozzle
- 20: surface
- 22: chassis
- 24: wheel
- 26: drive
- 28: deflector
- 30: tray
- 32: cylindrical body
- 34: sleeve
- 36: process step
- 38: process step
- 40: vehicle
- 42: nozzle

## Claims

1. A device (10) for artificially generating road spray, the device (10) comprising:
a frame (14);
a roller (12); and
a reservoir (16);
wherein the roller (12) is rotatably mounted on the frame (14); and
wherein the device (10) is configured to supply a liquid from the reservoir (16) to a surface (20) of the roller (12).

2. The device (10) of claim 1, further comprising:
a towable chassis (22) having at least two wheels (24).

3. The device (10) of claim 1 or 2, further comprising:
a drive (26), wherein the drive (26) is configured to cause a rotation of the roller (12) relative to the frame (14).

4. The device (10) of any one of claims 1 to 3, wherein during operation, an axis of rotation of the roller (12) is less than 1 meter above the ground.

5. The device (10) of any one of claims 1 to 4, further comprising:
a nozzle (18);
wherein the nozzle (18) is connected to the reservoir (16); and
wherein the nozzle (18) is aligned and/or configured to supply the liquid from the reservoir (16) through the nozzle (18) onto the surface (20) of the roller (12).

6. The device (10) of any one of claims 1 to 5, further comprising:
an adjustable deflector (28) for controlling a directivity of the artificially generated road spray.

7. The device (10) of any one of claims 1 to 6, further comprising:
a tray (30) arranged below the roller (12).

8. The device (10) of any one of claims 1 to 7, further comprising:
a sensor for detecting a density and/or directivity of the road spray.

9. The device (10) of any one of claims 1 to 8, wherein the surface (20) of the roller (12) is structured.

10. The device (10) of any one of claims 1 to 8, wherein the roller (12) comprises a cylindrical body (32) and a removable sleeve (34) mounted to the cylindrical body (32).

11. A method, comprising:
supplying water and/or a suspension comprising water to a surface (20) of a rotating roller (12); and
exposing a vehicle (40) to road spray generated by the rotation of the wetted roller (12).

12. The method of claim 11, further comprising:
testing a sensor of the vehicle (40).

13. The method of claim 11 or 12, wherein during operation, an axis of rotation of the roller (12) is less than 1 meter or less than half a height of the vehicle (40) above the ground.

14. The method of any one of claims 11 to 13, wherein the vehicle (40) moves while being exposed to the road spray.

15. The method of any one of claims 11 to 14, further comprising:
controlling properties of the road spray through a wireless connection.
